## Europäisches Patentamt

## European Patent Office

## Office européen des brevets

(19)

(11) Veröffentlichungsnummer: **0 318 757**
**A2**

(12) **EUROPÄISCHE PATENTANMELDUNG**

(21) Anmeldenummer: **88119064.9**

(22) Anmeldetag: **17.11.88**

(51) Int. Cl.4: **H04N 5/44**

(30) Priorität: **02.12.87 DE 3740826**

(43) Veröffentlichungstag der Anmeldung:
**07.06.89 Patentblatt 89/23**

(84) Benannte Vertragsstaaten:
**DE FR GB IT**

(71) Anmelder: **Blaupunkt-Werke GmbH**
**Robert-Bosch-Strasse 200**
**D-3200 Hildesheim(DE)**

(72) Erfinder: **Hentschel, Christian**
**Katharinenstrasse 5**
**D-3300 Braunschweig(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Fernsehempfänger mit einer Einrichtung zur Unterdrückung von Flimmerstörungen.**

(57) Bei einem Fernsehempfänger mit einer Einrichtung zur Unterdrückung von Flimmerstörungen im wiedergegebenen Fernsehbild erfolgt eine Umwandlung von übertragenen Videosignalen in wiederzugebende Videosignale mit gleicher Vertikalfrequenz, die ein fortlaufendes Raster ohne Zwischenzeile bilden. Die wiederzugebenden Videosignale werden in Abhängigkeit vom Vorliegen von im wesentlichen horizontal verlaufenden Kanten nach einem ersten oder nach einem zweiten Verfahren abgeleitet. Das erste Verfahren bevorzugt die Wiedergabe von Bewegungen und das zweite Verfahren die Wiedergabe von horizontal verlaufenden Kanten.

Fig. 4.

## Fernsehempfänger mit einer Einrichtung zur Unterdrückung von Flimmerstörungen

Die Erfindung geht aus von einem Fernsehempfänger mit einer Einrichtung zur Unterdrückung von Flimmerstörungen nach der Gattung des Hauptanspruchs.

Die Qualität einer Fernsehübertragung wird wesentlich von Systemparametern, wie Bildfrequenz, Zeilenzahl und Signalbandbreite, beeinflußt. Dabei ist für eine flimmerfreie Wiedergabe sowie für eine Wiedergabe von Bewegungsvorgängen eine nicht zu niedrige Bildfrequenz erforderlich, während im Interesse einer möglichst hohen Auflösung eine möglichst hohe Zeilenzahl erforderlich ist. Beide Forderungen zielen auf eine hohe Bandbreite ab.

Bei der Festlegung der heute üblichen Fernsehsysteme wurden Kompromisse zwischen einem durch die damals gegebenen technischen Möglichkeiten bedingten Aufwand und einer möglichst hohen Bildqualität geschlossen. Eine Qualitätsverbesserung wird dabei durch das sogenannte Zeilensprung-Verfahren erreicht, bei welchem jeweils ein aus einer ungeraden Anzahl von Zeilen bestehendes Fernsehbild (Vollbild) aus zwei ineinander verschachtelten Teilbildern besteht. Bei einem genügend großen Betrachtungsabstand unterscheidet das Auge nicht die beiden Teilbilder voneinander, so daß bezüglich des Flimmerns von einer doppelt so großen Bildwiederholfrequenz ausgegangen werden kann. Bei dem europäischen Fernsehsystem wird damit nicht die Bildwiederholfrequenz von 25 Hz, sondern die Teilbildfrequenz von 50 Hz bezüglich des Flimmerns wirksam.

Die Annahme, daß die Teilbildfrequenz für das Flimmern maßgebend ist, gilt jedoch nur unter bestimmten Voraussetzungen. Insbesondere gilt sie dann nicht, wenn Strukturen der zu übertragenden Vorlagen in der Größenordnung einer Zeilenbreite liegen oder einen kontrastreichen Übergang in vertikaler Richtung bilden. So wird beispielsweise eine horizontal verlaufende Kante, sofern sie einen genügend scharfen Helligkeitsübergang darstellt, bei der von oben nach unten fortschreitenden zeilenweisen Abtastung von einer Zeile eines ersten Teilbildes nicht erfaßt, dann von der zeitlich darauffolgenden Zeile des gleichen Teilbildes erfaßt und bei der Abtastung des nächsten Teilbildes von der zwischen beiden Zeilen liegenden Zeile des nächsten Teilbildes ebenfalls erfaßt. Da die einzelnen Zeilen nur mit einer Folgefrequenz von 25 Hz abgetastet, übertragen und wiedergegeben werden, scheint die Kante im 25 Hz-Rhythmus um eine Zeilenbreite auf- und abzuspringen. Dieses sogenannte Kantenflackern kann bei entsprechenden Vorlagen äußerst störend in Erscheinung treten.

Sowohl zur Vermeidung der großflächigen Flimmerstörungen als auch zur Verringerung des Kantenflackerns sind Maßnahmen bekannt geworden. Dabei wird die Teilbildfrequenz bzw. Vertikalfrequenz heraufgesetzt, so daß das Flimmern großer heller Flächen vermieden wird. Bei der Heraufsetzung der Vertikalfrequenz ist jedoch ein Wiederholen der ursprünglichen Teilbilder bzw. ein Zusammensetzen der neuen Teilbilder aus den ursprünglichen Teilbildern erforderlich, wozu verschiedene Verfahren bekannt sind. Dabei ermöglichen diese bekannten Verfahren eine Verbesserung des Flimmerns bzw. Flackerns nicht gleichermaßen für alle verschiedenen Bildvorlagen. So macht sich beispielsweise eine Wiederholung von Vollbildern zum Zwecke der Erhöhung der Teilbildfrequenz auf die Wiedergabe von Bewegungsabläufen störend bemerkbar. Zur Vermeidung dieses Nachteils sind beispielsweise durch DE-A1 32 03 978 und DE-A1 34 42 890 Anordnungen zur Bildflimmerkorrektur bekannt geworden, bei welchen mit Hilfe eines Bewegungsdetektors eine Umschaltung zwischen verschiedenen Korrekturen erfolgt. Ein Bewegungsdetektor benötigt jedoch mindestens einen Teilbildspeicher und bedeutet daher zusätzlichen Aufwand.

Der vorliegenden Erfindung liegt die Aufgabe zugrunde, einen Fernsehempfänger mit einer Einrichtung zur Unterdrückung von Flimmerstörungen im wiedergegebenen Fernsehbild anzugeben, bei welchem mit möglichst geringem Aufwand eine Unterdrückung von Flimmerstörungen bei guter Wiedergabe von Bewegungsabläufen erfolgt. Ausgenommen ist die Beseitigung von großflächigen Flimmerstörungen, die durch eine niedrige Vertikalfrequenz entstehen.

Der erfindungsgemäße Fernsehempfänger mit den kennzeichnenden Merkmalen des Hauptanspruchs hat den Vorteil, daß eine Unterdrückung von Flimmerstörungen bei gleichzeitiger guter Wiedergabe von Bewegungsabläufen mit möglichst geringem technischen Aufwand möglich ist. Besonders vorteilhaft ist der erfindungsgemäße Fernsehempfänger bei Fernsehsystemen mit einer Vertikalfrequenz von 60 Hz, es ist jedoch auch eine Verminderung der Flimmerstörungen bei 50 Hz-Systemen möglich.

Durch die in den Unteransprüchen aufgeführten Maßnahmen sind vorteilhafte Weiterbildungen und Verbesserungen der im Hauptanspruch angegebenen Erfindung möglich.

Besonders vorteilhaft ist eine Weiterbildung zur Verbesserung der Wiedergabe von Kanten, bei welcher bei Vorliegen von Kanten eine andere Ableitung der wiederzugebenden Videosignale vorgenommen wird.

Ausführungsbeispiele der Erfindung sind in der Zeichnung anhand mehrerer Figuren dargestellt und in der nachfolgenden Beschreibung näher erläutert. Es zeigt:

Fig. 1 eine schematische Gegenüberstellung der übertragenen Signale und der entsprechend den Darstellungen nach Fig. 2 und 3 abgeleiteten Signale,

Fig. 2 eine schematische Darstellung der Ableitung der wiederzugebenden Videosignale für eine gute Wiedergabe von Bewegungsabläufen,

Fig. 3 eine schematische Darstellung der Ableitung der wiederzugebenden Videosignale für eine gute Wiedergabe horizontaler Kanten,

Fig. 4 ein Blockschaltbild eines Ausführungsbeispiels,

Fig. 5 ein Blockschaltbild und Diagramme zur Erläuterung eines Zeilenkompressors,

Fig. 6 und Fig. 7 je ein Ausführungsbeispiel eines Kantendetektors und

Fig. 8 ein Ausführungsbeispiel mit zwei Kantendetektoren.

Gleiche Teile sind in den Figuren mit gleichen Bezugszeichen versehen.

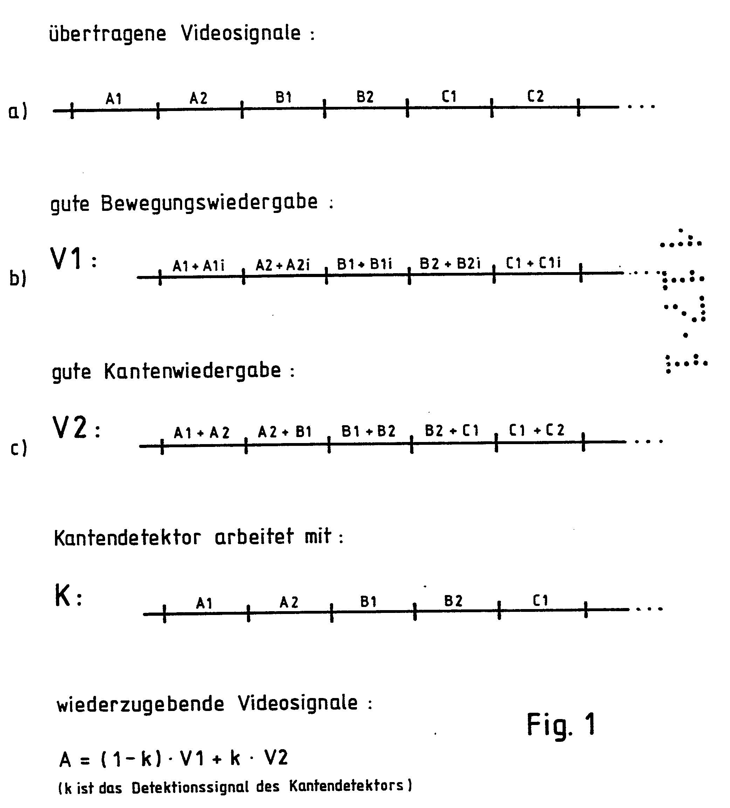

Zeile a) der Fig. 1 zeigt die zeitliche Abfolge dreier Vollbilder üblicher Videosignale nach dem Zeilensprung-Verfahren. Dabei besteht jedes der Vollbilder aus einem Teilbild A1 und A2, B1 und B2 bzw. C1 und C2. Bei Videosignalen nach der europäischen 625-Zeilen-Norm beträgt die Dauer eines Teilbildes 20 ms. Aus den in Zeile a) schematisch dargestellten Signalen werden Signale mit gleicher Vertikalfrequenz ohne Zeilensprung umgeformt. Es ergibt sich dadurch ein Vollbild innerhalb einer Teilbildperiode bzw. Vertikalperiode der empfangenen Signale. Die Vollbilder der in Zeile b) dargestellten Signale V1 werden dabei jeweils aus dem Inhalt eines der Teilbilder abgeleitet. Dabei erfolgt keine Störung des Bewegungsablaufes, da keine zeitliche Verschachtelung der empfangenen Signale erfolgt. Um zu einer fortlaufenden Abtastung ohne Zeilensprung zu kommen, werden die Zeilen der Vollbilder durch Interpolation in vertikaler Richtung gewonnen. Dieses kann beispielsweise in einfacher Form durch eine Wiederholung der Zeilen oder durch eine Mittelung der Signale benachbarter Zeilen geschehen.

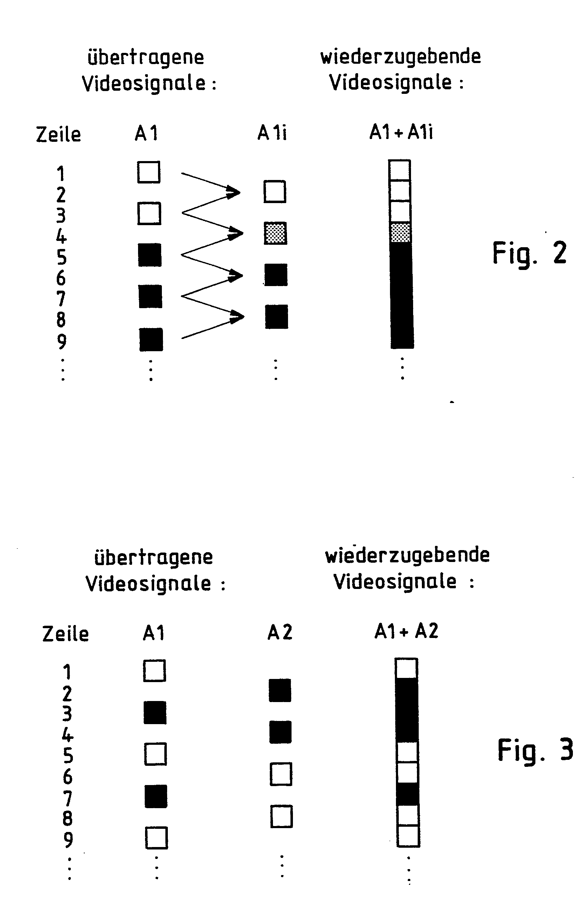

Dieses ist in Fig. 2 für einige Zeilen schematisch dargestellt, wobei die Zeilen 1 und 3 des Teilbildes A1 und damit auch des abgeleiteten Vollbildes einen weißen Bildinhalt und die Zeilen 5, 7 und 9 einen schwarzen Bildinhalt aufweisen. Die geradzahligen Zeilen des Vollbildes werden durch Interpolation jeweils zweier zeitlich aufeinanderfolgender Zeilen des Teilbildes A1 der empfangenen Signale gewonnen. Dabei erhält die Zeile 2 eine der Helligkeit weiß entsprechende Amplitude, die Zeilen 6 und 8 stellen schwarz dar, während die Helligkeit, welche durch die Zeile 4 wiedergegeben wird, einem mittleren Wert entspricht. In der rechten Spalte der Fig. 2 sind die entsprechenden Zeilen des Vollbildes untereinander dargestellt, dabei bedeutet die angegebene Formel A1 + AII keine mathematische Addition, sondern die Gewinnung der ungeradzahligen Zeilen aus dem ersten Teilbild A1 und die Gewinnung der geradzahligen Zeilen durch Interpolation der Signale benachbarter Zeilen des Teilbildes A1.

Fig. 3 zeigt die Ableitung der wiederzugebenden Signale, wenn durch einen Kantendetektor eine horizontal verlaufende Kante angezeigt wird. Bei der Darstellung nach Fig. 3 ist ein gegenüber der Darstellung nach Fig. 2 unterschiedlicher Bildinhalt als Beispiel angegeben. Dabei wird jeweils ein Vollbild aus zwei aufeinanderfolgenden Teilbildern der empfangenen Signale gewonnen. Die Zeilen eines jeden Teilbildes A1 bzw. A2 stellen die gleichlautend numerierten Zeilen des Vollbildes A1 + A2 dar. Der gesamte Inhalt eines Vollbildes der empfangenen Signale wird also innerhalb eines Vollbildes der wiederzugebenden Signale auf den Bildschirm geschrieben.

Während beispielsweise die Zeile 5 bei einer direkten Wiedergabe der empfangenen Signale nur einmal während eines jeden Vollbildes, also alle 40 ms geschrieben wird - die entsprechende Stelle des Bildschirms also nur alle 40 ms aufgehellt wird - erfolgt bei der Ableitung der Videosignale ohne Zeilensprung gemäß Fig. 3 ein Aufleuchten im Abstand von 20 ms, wodurch ein Kantenflackern vermieden wird.

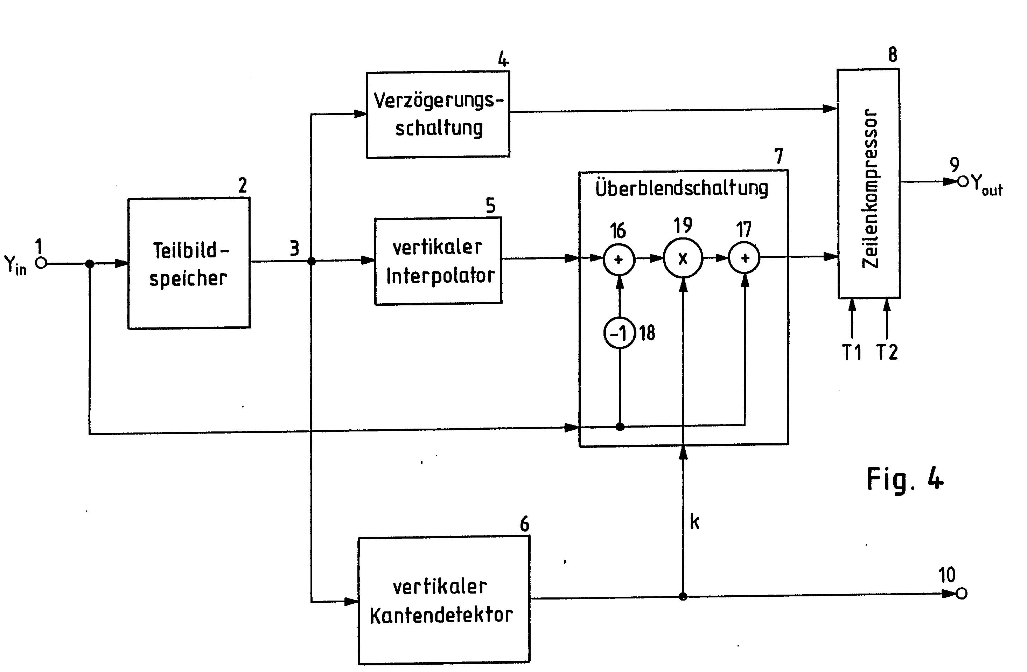

Fig. 1, Zeile c) stellt die wiederzugebenden Videosignale dar, die eine gute Kantenwiedergabe ermöglichen. In Zeile d) der Fig. 4 sind diejenigen Teilbilder angegeben, deren Videosignale dem Kantendetektor jeweils zugeführt werden. Je nach Vorliegen der Kanten wird eines der Videosignale V1 oder V2 dem Ausgang der Einrichtung zur Unterdrückung von Flimmerstörungen zugeführt. Dazu wird vom Kantendetektor eine Überblendschaltung angesteuert, deren Ausgangssignal sich aus $A = (1-k) * V1 + k * V2$ ergibt, wobei k das Ausgangssignal des Kantendetektors ist. Da zur Ableitung der Videosignale V2 zwei Teilbilder der übertragenen Signale gleichzeitig benötigt werden, sind die Signale V1, V2 und k gegenüber den übertragenen Signalen (Zeile a)) um eine Teilbildperiode verzögert.

Fig. 4 zeigt ein Blockschaltbild eines ersten Ausführungsbeispiels, bei welchem die Videosignale, wie in den Figuren 1 bis 4 schematisch dargestellt, verarbeitet werden. Vor dem Eingehen auf Einzelheiten des Blockschaltbildes sei erwähnt, daß die Erfindung sowohl für Schwarz/Weiß- als auch Farbfernsehsignale anwendbar ist. Es kann dabei ein multiplexes Farbfernsehsignal verarbeitet werden oder die Chrominanz- und die Luminanzinformation in grundsätzlich gleichwirkenden Einrichtungen parallel verarbeitet werden. Je nach verwendetem Farbfernsehsystem ist die vertikale Interpolation entsprechend anzupassen. Auch die Steuerung der Chrominanzverarbeitung durch einen Kantendetektor, der nur die Luminanzsignale auswertet, ist denkbar.

Das Blockschaltbild nach Fig. 4 ist beispielhaft für ein Luminanzsignal Y vorgesehen, welches als Signal Yin dem Eingang 1 der Schaltungsanordnung nach Fig. 4 zugeführt wird. Vom Eingang 1 wird das Signal einem Teilbildspeicher 2 zugeführt, an dessen Ausgang 3 ein um eine Teilbildperiode verzögertes Signal abnehmbar ist.

An den Ausgang 3 des Teilbildspeichers 2 sind Eingänge einer Verzögerungsschaltung 4, eines vertikalen Interpolators 5 und eines vertikalen Kantendetektors 6 angeschlossen. Das Ausgangssignal k des Kantendetektors steuert eine Überblendschaltung 7 derart, daß bei Vorliegen von Kanten das Eingangssignal Yin von der Überblendschaltung 7 weitergeleitet wird. Anderenfalls wird das Ausgangssignal des vertikalen Interpolators 5 an den Ausgang der Überblendschaltung 7 geführt.

Vertikale Interpolatoren sind an sich bekannt und brauchen im Zusammenhang mit der vorliegenden Erfindung nicht näher erläutert zu werden. Sie enthalten im wesentlichen Zeilen-Verzögerungsschaltungen und eine Schaltung zur Bildung eines Mittelwertes.

Die Überblendschaltung 7 enthält zwei Addierschaltungen 16, 17, eine Invertierschaltung 18 sowie eine Multiplizierschaltung 19 und gibt ein Ausgangssignal nach der in Fig. 1 angegebenen Gleichung ab.

Im Kantendetektor 6 werden in an sich bekannter Weise Signale zweier oder mehrerer aufeinanderfolgender Zeilen miteinander verglichen. Eine Abweichung dieser Signale voneinander wird als Kante gewertet, worauf das Ausgangssignal des vertikalen Kantendetektors 6 einen Wert bis $k = 1$ annimmt. Liegt keine Kante vor, so ist $k = 0$. Im einfachsten Fall, wenn nur zwei Zustände ermittelt werden ($k = 1$ oder $k = 0$), kann die Überblendschaltung durch einen Umschalter ersetzt werden.

Sowohl die Ausgangssignale der Verzögerungsschaltung 4, mit welcher die Laufzeit der Signale durch den vertikalen Interpolator und durch die Überblendschaltung 7 ausgeglichen wird, als auch die Ausgangssignale der Überblendschaltung 7 gelangen zu einem Zeilenkompressor 8, welcher im wesentlichen mehrere Ein-Zeilenspeicher umfaßt. In diesen Speicher werden die zugeführten Signale mit einem Takt T1 eingeschrieben und mit einem Takt T2 ausgelesen, dessen Frequenz doppelt so groß ist. Dadurch wird eine Verdoppelung der Zeilenfrequenz bzw. eine Halbierung der Zeilenperiode erreicht, was dadurch notwendig wird, daß während einer Teilbildperiode der übertragenen Videosignale ein Vollbild - also doppelt so viele Zeilen - der wiederzugebenden Videosignale dem Ausgang 9 zugeleitet wird. Ein weiterer Ausgang 10 ist für das Ausgangssignal des vertikalen Kantendetektors 6 vorgesehen, um beispielsweise eine ähnliche Schaltungsanordnung für ein Farbartsignal zu steuern.

Wie aus der Gegenüberstellung gemäß Fig. 1 ersichtlich ist, werden sowohl für das Signal V1 als auch für das Signal V2 die Signale des jeweils vorangegangenen Teilbildes benötigt. Deshalb wird das Ausgangssignal der Verzögerungsschaltung 4 ständig dem Zeilenkompressor zugeführt. Ist keine Kante vorhanden, so wird zusätzlich das Ausgangssignal des vertikalen Kantendetektors 6, welches in Fig. 1b) mit A1i, A2i, B1i usw. bezeichnet ist, dem Zeilenkompressor zugeführt. Bei Vorliegen einer Kante wird die Überblendschaltung 7 derart angesteuert, daß die Signale des folgenden Teilbildes (A2, B1 usw.) zusätzlich zu den über die Verzögerungsschaltung 4 geleiteten Signalen zum Zeilenkompressor 9 gelangen, so daß sich die wiederzugebenden Videosignale gemäß Fig. 1, Zeile c) zusammensetzen.

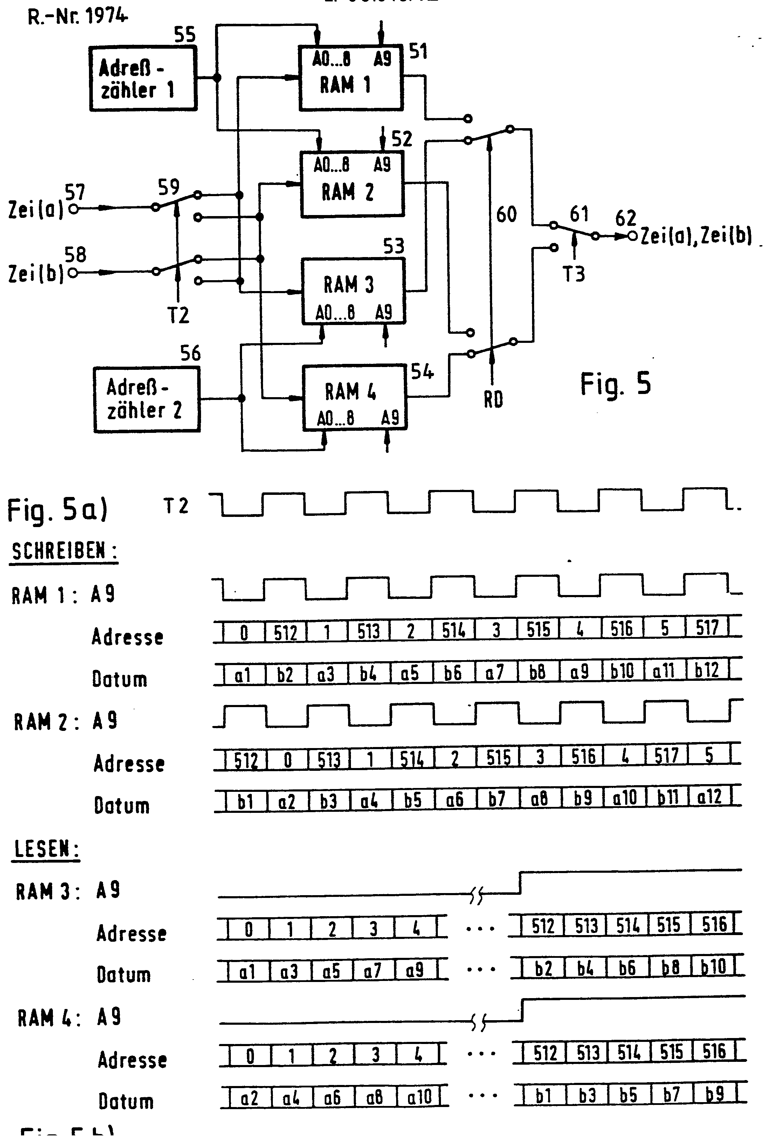

Fig. 5 zeigt ein Ausführungsbeispiel für einen Zeilenkompressor, bei welchem eine gute Ausnutzung des Speicherplatzes bei einer möglichst geringen Verarbeitungsgeschwindigkeit erfolgt. Dabei sind vier Schreib-Lese-Speicher (RAM) 51, 52, 53, 54 vorgesehen, wobei jeweils zwei Schreib-Lese-Speicher von einem Adressenzähler 55 bzw. 56 angesteuert werden. Die Adressenzähler 55, 56 erzeugen jeweils neun Stellen der Adresse, während eine zehnte Stelle A9 wie in den Zeitdiagrammen nach Fig. 5a) und 5b) dargestellt ist, zugeführt wird. Die Signale zweier Zeilen, Zei(a) und Zei(b) werden Eingängen 57, 58 des Zeilenkompressors zugeführt und über einen Eingangsumschalter 59, der mit einem Takt T2 gesteuert wird, auf die Schreibeingänge der Schreib-Lese-Speicher 51 bis 54 verteilt.

Die Ausgänge der Schreib-Lese-Speicher 51 bis 54 sind über zwei ausgangsseitige Umschalter 60, 61 mit dem Ausgang 62 verbindbar.

Während die Schreib-Lese-Speicher 51 und 52 beschrieben werden, werden die Schreib-Lese-Speicher 53 und 54 gelesen. Die Schreib-Lese-Speicher 51 und 52 werden alternierend mit den Daten aus den Zeilen (a) und (b) beschrieben. Dabei liegt an den Adresseneingängen A9 ein zum Takt T2 komplementäres Signal. Dadurch wird erreicht, daß die Zeile (a) aufwärts zählend ab Adresse 1 beginnt, die Zeile (b) dagegen ab Adresse 512. Beim Lesen werden zunächst die Speicheradressen A9 auf 0 gelegt. An die Speicherausgänge gelangen nun immer zwei Daten (bzw. Datenworte) der Zeile (a). Die als Ausgangsmultiplexer dienenden Umschalter 60, 61 bewirken, daß die Daten in der richtigen Reihenfolge mit der doppelten Geschwindigkeit an den Ausgang gelangen. Nach der Zeile (a) wird durch Umschalten der Adressen A9 auf den Wert 1 die Zeile (b) gelesen.

Der Vorteil der dargestellten Schaltung liegt darin, daß die Speicher immer mit der gleichen maximalen Datenrate arbeiten und zeitlich optimal ausgenutzt werden. Eine Verdopplung der Datenrate innerhalb der Speicher, wie es vereinfachend im Zusammenhang mit Fig. 4 angedeutet ist, würde den Aufwand erheblich vergrößern, die maximale Geschwindigkeit käme aber nur beim Lesen zur Geltung.

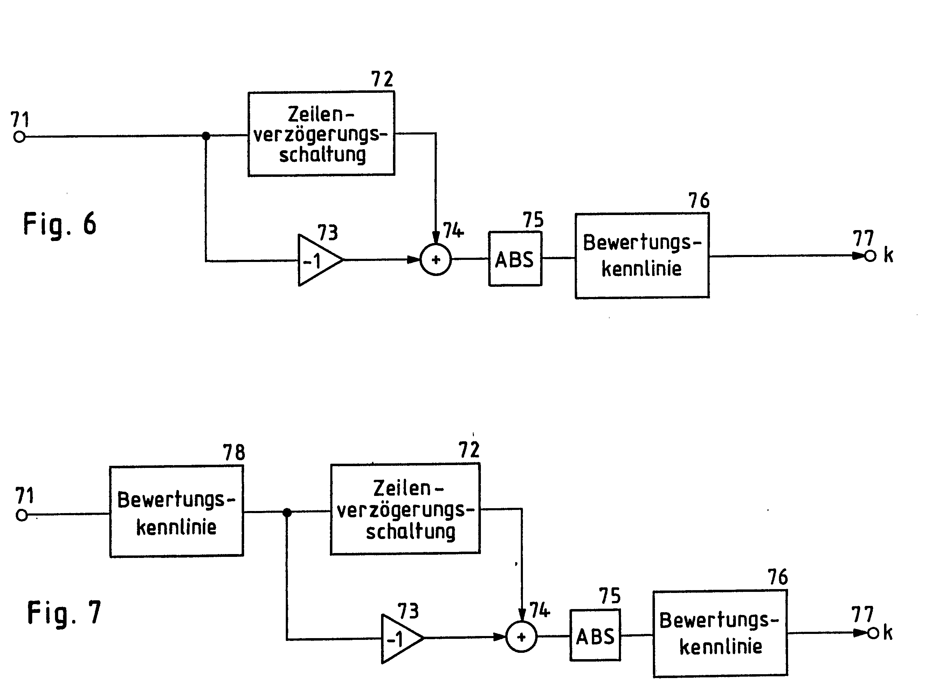

Bei den in den Figuren 6 und 7 dargestellten Ausführungsbeispielen für Kantendetektoren werden von einem Eingang 71 die Videosignale einerseits über eine Zeilenverzögerungsschaltung 72 und andererseits über eine Invertierschaltung 73 je einem Eingang einer Addierschaltung 74 zugeführt, so daß am Ausgang die Differenz der verzögerten und der unverzögerten Signale ansteht. Je nach Verwendungszweck im einzelnen weist die Verzögerungsschaltung 72 die Dauer einer oder gegebenenfalls auch mehrerer Zeilen auf. Bei einer Verzögerungszeit von einer Zeilendauer werden Amplitudendifferenzen zweier aufeinanderfolgender Zeilen als Kante erkannt. Über eine Schaltung 75 zur Bildung des Absolutwertes und eine nichtlineare Schaltung 76 gelangt das Differenzsignal zum Ausgang 77 und kann als Signal k der Überblendschaltung 7 (Fig. 4) zugeleitet werden.

Die Bewertungskennlinie der nichtlinearen Schaltung 76 hängt von den Erfordernissen im einzelnen ab. So kann es beispielsweise vorteilhaft sein, kleinere Differenzsignale geringer als größere Differenzsignale zu bewerten.

Gegenüber dem Ausführungsbeispiel nach Fig. 6 weist die Schaltung nach Fig. 7 eine weitere nichtlineare Schaltung 78 auf, welche die Eingangssignale bereits einer Bewertung unterwirft.

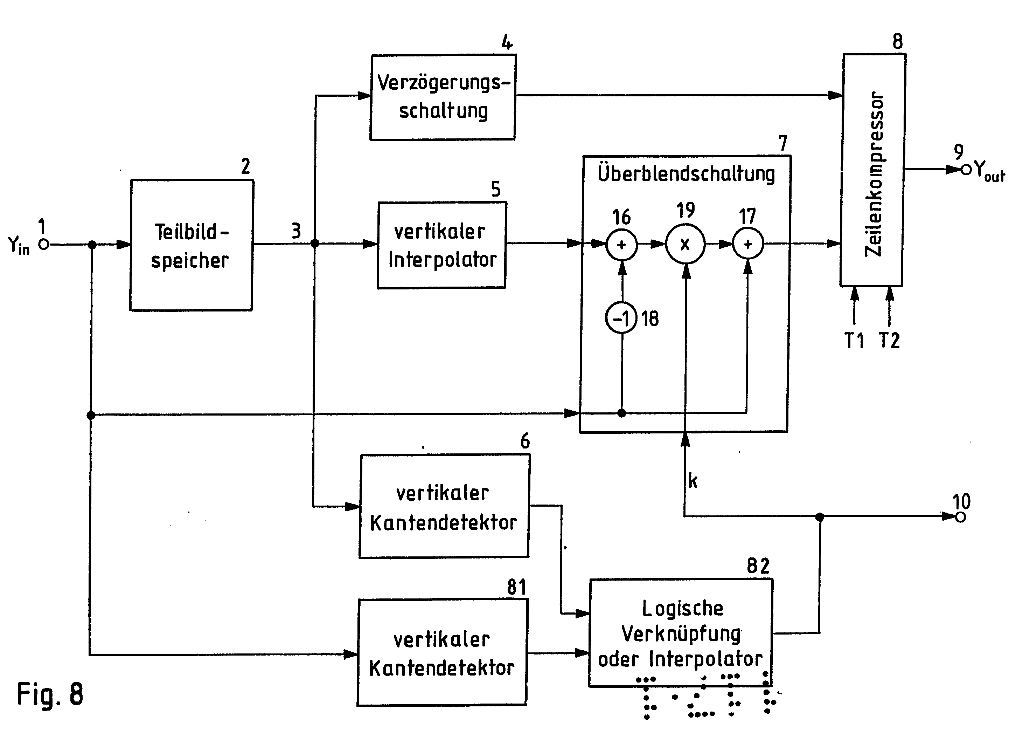

Das in Fig. 8 dargestellte Ausführungsbeispiel unterscheidet sich von dem in Fig. 4 dargestellten dadurch, daß zusätzlich zu dem Kantendetektor 6 ein weiterer Kantendetektor 81 vorgesehen ist. Die Ausgangssignale beider Kantendetektoren werden über eine Schaltung 82 der Überblendschaltung zugeführt. Durch den weiteren Kantendetektor 81 wird für bestimmte Bildinhalte die Erkennung von Kanten verbessert. Dieses wird im folgenden anhand eines Bildinhalts, der eine horizontale Linie darstellt, erläutert. Dabei sei angenommen, daß die horizontale Linie so schmal ist, daß sie lediglich von einer Zeile erfaßt wird. Ein an sich für die Durchführung des erfindungsgemäßen Verfahrens vorgesehener Kantendetektor (siehe Fig. 6 oder 7) wertet zwei zeitlich aufeinander folgende Zeilen eines Teilbildes aus. Ist jedoch die angenommene horizontale Linie in diesem Teilbild nicht, sondern im folgenden bzw. vorausgegangenen Teilbild erfaßt worden, so spricht der Kantendetektor nicht an.

Um jedoch auch derartige Bildinhalte möglichst störungsfrei wiederzugeben, werden dem weiteren Kantendetektor 81 Signale eines zweiten Teilbildes derart zugeführt, daß der weitere Kantendetektor ein Kantensignal abgibt, wenn der Inhalt zweier benachbarter Zeilen verschieden ist.

Je nachdem ob die Kantendetektoren 6, 81 zweistufige oder mehrstufige Ausgangssignale abgeben, kann in der Schaltung 82 eine logische Verknüpfung oder eine Interpolation verwendet werden. Dabei erfolgt die logische Verknüpfung vorzugsweise mit einer Oder-Schaltung.

## Ansprüche

1. Fernsehempfänger mit einer Einrichtung zur Unterdrückung von Flimmerstörungen im wiedergegebenen Fernsehbild,
dadurch gekennzeichnet,
daß eine Umwandlung von übertragenen Videosignalen in wiederzugebende Videosignale mit gleicher Vertikalfrequenz erfolgt, daß die wiederzugebenden Videosignale ein fortlaufendes Raster ohne Zwischenzeile bilden,
daß die wiederzugebenden Videosignale in Abhängigkeit vom Vorliegen von im wesentlichen horizontal verlaufenden Kanten nach einem ersten oder nach einem zweiten Verfahren abgeleitet werden,
daß das erste Verfahren die Wiedergabe von Bewegungen bevorzugt,
daß das zweite Verfahren die Wiedergabe von horizontal verlaufenden Kanten bevorzugt,
daß die jeweils zu einem Bild gehörenden wiederzugebenden Videosignale aus den übertragenen Videosignalen jeweils eines Teilbildes abgeleitet werden und
daß die wiederzugebenden Videosignale durch zeilenweise Wiederholung und Zeitkompression der übertragenen Videosignale gewonnen werden.

2. Fernsehempfänger mit einer Einrichtung zur Unterdrückung von Flimmerstörungen im wiedergegebenen Fernsehbild,
dadurch gekennzeichnet,
daß eine Umwandlung von übertragenen Videosignalen in wiederzugebende Videosignale mit gleicher Vertikalfrequenz erfolgt,
daß die wiederzugebenden Videosignale ein fortlaufendes Raster ohne Zwischenzeile bilden,
daß die wiederzugebenden Videosignale in Abhängigkeit vom Vorliegen von im wesentlichen horizontal verlaufenden Kanten nach einem ersten oder nach einem zweiten Verfahren abgeleitet werden,

daß das erste Verfahren die Wiedergabe von Bewegungen bevorzugt,

daß das zweite Verfahren die Wiedergabe von horizontal verlaufenden Kanten bevorzugt,

daß die jeweils zu einem Bild gehörenden wiederzugebenden Videosignale aus den übertragenen Videosignalen jeweils eines Teilbildes abgeleitet werden und

daß die wiederzugebenden Videosignale zeilenweise abwechselnd aus den übertragenen Videosignalen und aus dem Interpolat jeweils zweier aufeinanderfolgender Zeilen der übertragenen Videosignale und durch Zeitkompression gewonnen werden.

3. Fernsehempfänger nach Anspruch 1 oder 2, dadurch gekennzeichnet,

daß ein Teilbildspeicher (2) vorgesehen ist, in welchen jeweils ein Teilbild der übertragenen Videosignale einschreibbar ist und aus welchem die gespeicherten Videosignale auslesbar sind,

daß an einen Ausgang (3) des Teilbildspeichers (2) ein Eingang eines vertikalen Kantendetektors (6), dessen Ausgang mit einem Steuereingang einer Überblendschaltung (7) verbunden ist, ein Eingang einer Verzögerungsschaltung (4) und ein Eingang eines vertikalen Interpolators (5) angeschlossen sind,

daß ein Eingang des Teilbildspeichers (2) und der Ausgang des vertikalen Interpolators (5) mit je einem Eingang der Überblendschaltung (7) verbunden ist und

daß der Ausgang der Verzögerungsschaltung (4) und der Ausgang der Überblendschaltung (7) mit einem Zeilenkompressor (8) verbunden sind, von dessen Ausgang (9) die wiederzugebenden Videosignale abnehmbar sind.

4. Fernsehempfänger nach Anspruch 1, 2 oder 3, dadurch gekennzeichnet,

daß mehrere, vorzugsweise zwei, Kantendetektoren (15, 81) für im wesentlichen horizontal verlaufende Kanten vorgesehen sind, deren Ausgangssignale miteinander kombiniert einem Steuereingang und einer Überblendschaltung (11) zuführbar sind,

daß ein erster Kantendetektor (15) zum Vergleich von jeweils zwei zeitlich aufeinanderfolgenden Zeilen eines Teilbildes eingerichtet ist und

daß ein zweiter Kantendetektor (81) zum Vergleich von jeweils zwei zeitlich aufeinanderfolgenden Zeilen eines anderen Teilbildes eingerichtet ist und

daß die Ausgangssignale des ersten und des zweiten Kantendetektors (15, 81) über eine Oder-Schaltung (82) dem Steuereingang der Überblendschaltung zuführbar sind.

R.-Nr. 1974

übertragene Videosignale :

a) 
| A1 | A2 | B1 | B2 | C1 | C2 | ...

gute Bewegungswiedergabe :

b) V1 :
| A1 + A1i | A2 + A2i | B1 + B1i | B2 + B2i | C1 + C1i | ...

gute Kantenwiedergabe :

c) V2 :
| A1 + A2 | A2 + B1 | B1 + B2 | B2 + C1 | C1 + C2 | ...

Kantendetektor arbeitet mit :

K :
| A1 | A2 | B1 | B2 | C1 | ...

wiederzugebende Videosignale :

Fig. 1

$A = (1 - k) \cdot V1 + k \cdot V2$

(k ist das Detektionssignal des Kantendetektors)

R.-Nr. 1974

übertragene
Videosignale :

wiederzugebende
Videosignale :

Zeile    A 1        A 1i      A1 + A1i

Fig. 2

übertragene
Videosignale :

wiederzugebende
Videosignale :

Zeile    A 1        A 2      A1 + A2

Fig. 3

R.- Nr. 1974

Fig. 4

R.-Nr. 1974

**Adreß-zähler 1** 55

RAM 1 51 — A0...8 A9

RAM 2 52 — A0...8 A9

RAM 3 53 — A0...8 A9

RAM 4 54 — A0...8 A9

**Adreß-zähler 2** 56

Zei(a) 57 — 59

Zei(b) 58 —

T2

60 RD

61 — 62 Zei(a), Zei(b)

T3

Fig. 5

---

**Fig. 5a)**   T2

**SCHREIBEN:**

RAM 1: A9

Adresse | 0 | 512 | 1 | 513 | 2 | 514 | 3 | 515 | 4 | 516 | 5 | 517 |

Datum | a1 | b2 | a3 | b4 | a5 | b6 | a7 | b8 | a9 | b10 | a11 | b12 |

RAM 2: A9

Adresse | 512 | 0 | 513 | 1 | 514 | 2 | 515 | 3 | 516 | 4 | 517 | 5 |

Datum | b1 | a2 | b3 | a4 | b5 | a6 | b7 | a8 | b9 | a10 | b11 | a12 |

**LESEN:**

RAM 3: A9

Adresse | 0 | 1 | 2 | 3 | 4 | · · · | 512 | 513 | 514 | 515 | 516 |

Datum | a1 | a3 | a5 | a7 | a9 | · · · | b2 | b4 | b6 | b8 | b10 |

RAM 4: A9

Adresse | 0 | 1 | 2 | 3 | 4 | · · · | 512 | 513 | 514 | 515 | 516 |

Datum | a2 | a4 | a6 | a8 | a10 | · · · | b1 | b3 | b5 | b7 | b9 |

Fig. 5b)

R.-Nr. 1974

**Fig. 6**

**72**
Zeilen-
verzögerungsschaltung

**71**

**73**
−1

**74**
+

**75**
ABS

**76**
Bewertungskennlinie

**77**
k

EP 0 318 757 A2

**78**
Bewertungskennlinie

**72**
Zeilen-
verzögerungsschaltung

**71**

**Fig. 7**

**73**
−1

**74**
+

**75**
ABS

**76**
Bewertungskennlinie

**77**
k

R.- Nr. 1974

Fig. 8